# EUROPÄISCHE PATENTANMELDUNG

(11) **EP 4 671 293 A1**
(43) Veröffentlichungstag der Anmeldung: **31.12.2025**
(21) Anmeldenummer: 24183991.9
(22) Anmeldetag: 24.06.2024
(51) Int. Cl.: C08G 18/10, C08G 18/80, C08G 18/24, C08G 18/30, C08G 18/42, C08G 18/48, C08G 18/76, C08K 3/04

(54) **STABILISATOR FÜR ISOCYANATGRUPPEN-HALTIGE ZUSAMMENSETZUNGEN**

(71) Anmelder: Sika Technology AG, 6340 Baar (CH)
(72) Erfinder: KUBE, Nicole, 8103 Unterengstringen (CH); SCHLUMPF, Michael, 8143 Stallikon (CH); COUPE, Alex, Lancaster, LA1 3RX (GB)
(74) Vertreter: Sika Patent Attorneys

(57) **Zusammenfassung**

Gegenstand der Erfindung ist die Verwendung von mindestens einem Malonat der Formel (I) als Stabilisator für die Lagerstabilität in Isocyanatgruppen-haltigen Zusammensetzungen, sowie eine härtbare Zusammensetzung erhalten aus der erfindungsgemässen Verwendung
Das Malonat der Formel (I) ermöglicht einkomponentige elastische Klebstoffe mit sehr guter Lagerstabilität, welche ohne Vorbehandlung mittels Primer ausgezeichnet auf Glas- und Keramiksubstraten haften. Ein solcher Klebstoff ist besonders geeignet zum Verkleben von Scheiben in der Fahrzeugindustrie.

## Beschreibung

### Technisches Gebiet

Die Erfindung betrifft die Verwendung von Stabilisatoren zur Erhöhung der Lagerstabilität von Isocyanatgruppen-haltigen Zusammensetzungen, Isocyanatgruppen-haltige Zusammensetzungen enthaltend solche Stabilisatoren und die Verwendung der Zusammensetzungen als elastische Klebstoffe und/oder Dichtstoffe.

### Stand der Technik

Einkomponentige feuchtigkeitshärtende Polyurethanzusammensetzungen und ihre Verwendung als elastische Klebstoffe, Dichtstoffe oder Beschichtungen sind bekannt, insbesondere auch zum Verkleben von Scheiben in der Fahrzeugindustrie. Die Lagerstabilität solcher Zusammensetzungen stellt immer wieder eine Herausforderung dar. Typischerweise enthalten solche Zusammensetzungen nur eine geringe Konzentration an Isocyanatgruppen. Dadurch können schon kleine Mengen Feuchtigkeit oder eine geringe Neigung zur Bildung von Isocyanat-Oligomeren zu vorzeitiger Vernetzung während der Lagerung im verschlossenen Gebinde führen. Dies zeigt sich in einem übermässigen Anstieg der Viskosität bis zum Gelieren der Zusammensetzung. Besonders herausfordernd ist die Lagerstabilität von Zusammensetzungen mit geringem Anteil an monomeren Diisocyanaten, sowie bei der Anwesenheit von Organosilanen und/oder metallorganischen Katalysatoren wie Dibutylzinndilaurat, speziell in Kombination mit Aminkatalysatoren wie 2,2'-Dimorpholinyldiethylether. Ein besonders geringer Gehalt an monomeren Diisocyanaten ist aber vorteilhaft in Bezug auf die EHS-Einstufung, und die Verwendung von Organosilanen in Kombination mit metallorganischen Katalysatoren ermöglicht besonders gute Haftungseigenschaften, insbesondere auf Glas oder Glaskeramik, wie sie in der Fahrzeugindustrie bei Windschutzscheiben vorhanden sind. Aus dem Stand der Technik ist Diethylmalonat als Stabilisator für die Lagerstabilität von Isocyanatgruppen-haltigen Zusammensetzungen bekannt, beispielsweise aus US 9,868,810 oder US 11,859,109.

### Darstellung der Erfindung

Aufgabe der vorliegenden Erfindung ist es, einen elastischen Klebstoff zur Verfügung zu stellen, welcher über eine gute Lagerstabilität und gute Haftungseigenschaften verfügt und geeignet ist für die Scheibenverklebung in Fahrzeugen. Überraschenderweise wird diese Aufgabe mit der Verwendung eines Malonats der Formel (I) als Stabilisator für die Lagerstabilität in Isocyanatgruppen-haltigen Zusammensetzungen gelöst. Das Malonat der Formel (I) ermöglicht einkomponentige feuchtigkeitshärtende elastische Klebstoffe mit sehr guter Lagerstabilität, welche ausgezeichnet auf üblichen Glas- und Keramiksubstraten haften, insbesondere auch ohne Vorbehandlung mittels Primer. Im Gegensatz dazu verbessert das aus dem Stand der Technik bekannte Diethylmalonat anstelle eines Malonats der Formel (I) zwar die Lagerstabilität solcher Zusammensetzungen, die Haftungseigenschaften sind aber deutlich schlechter, insbesondere auf gewissen Keramiksubstraten.

Die erfindungsgemässe Verwendung ermöglicht einkomponentige Polyurethanklebstoffe mit guter Lagerstabilität, hervorragender Verarbeitbarkeit, insbesondere einer hohen Standfestigkeit, einem geringen Fadenzug und einer ausreichend langen Offenzeit bei schneller Aushärtung, sowie einer hohen Festigkeit und Elastizität und ausgezeichneten Haftungseigenschaften, auch ohne Vorbehandlung mittels Primer, insbesondere auf bei der Scheibenverklebung üblichen Substraten wie Glas oder Glaskeramik. Dabei werden diese guten Eigenschaften insbesondere auch erreicht mit nicht-kennzeichnungspflichtigen Klebstoffen basierend auf Isocyanatgruppen-haltigen Polymeren mit sehr niedrigem Gehalt an monomeren Diisocyanaten, insbesondere auch solchen abgeleitet von besonders reaktiven aromatischen Diisocyanaten wie Diphenylmethandiisocyanat (MDI) oder Toluendiisocyanat (TDI).

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist Verwendung von mindestens einem Malonat der Formel (I) als Stabilisator für die Lagerstabilität in Isocyanatgruppen-haltigen Zusammensetzungen, wobei 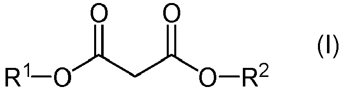
R¹ für einen gegebenenfalls Ethergruppen enthaltenden Kohlenwasserstoffrest mit 5 bis 100 C-Atomen steht, und
R² für R¹ oder für R³ steht, wobei R³ für einen gegebenenfalls verzweigten Alkylrest mit 1 bis 4 C-Atomen steht.

Als "lagerstabil" wird eine Zusammensetzung bezeichnet, wenn sie bei Raumtemperatur in einem geeigneten Gebinde während längerer Zeit, typischerweise während mindestens 3 Monaten bis zu 6 Monaten und mehr, aufbewahrt werden kann, ohne dass sie sich in ihren Anwendungs- oder Gebrauchseigenschaften durch die Lagerung in einem für ihren Gebrauch relevanten Ausmass verändert. Zum Beurteilen der Lagerstabilität kann eine beschleunigte Alterung der Zusammensetzung im verschlossenen Gebinde während 7 oder 14 Tagen bei 60 °C erfolgen.

Als "Malonatgruppe" wird eine funktionelle Gruppe der Formel 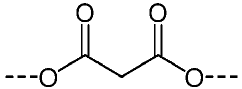 bezeichnet, welche über die gestrichelte Linie an jeweils ein C-Atom gebunden ist.

Als "Molekulargewicht" wird die molare Masse (in Gramm pro Mol) eines Moleküls oder Molekül-Rests bezeichnet. Als "mittleres Molekulargewicht" wird das Zahlenmittel des Molekulargewichts (Mₙ) einer polydispersen Mischung von oligomeren oder polymeren Molekülen oder Molekül-Resten bezeichnet. Das mittlere Molekulargewicht Mₙ wird insbesondere mittels Gelpermeationschromatographie (GPC) gegen Polystyrol als Standard bestimmt.

Als "NCO-Gehalt" wird der Gehalt an Isocyanatgruppen in Gewichts-% bezogen auf das ganze Polymer bezeichnet.

Als "einkomponentig" wird eine Zusammensetzung bezeichnet, bei welcher alle Bestandteile der Zusammensetzung im gleichen Gebinde vorliegen und gelagert werden.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt steht R¹ für einen Kohlenwasserstoffrest mit 6 bis 20 C-Atomen, bevorzugt 10 bis 18 C-Atomen, oder für einen Ethergruppen enthaltenden Kohlenwasserstoffrest mit 5 bis 100 C-Atomen, bevorzugt 10 bis 80 C-Atomen.

Besonders bevorzugt ist R¹ ausgewählt aus der Liste bestehend aus Decyl, Undecyl, Dodecyl, Tridecyl, Tetradecyl, Pentadecyl, Hexadecyl, Heptadecyl und Octadecyl, wobei diese genannten Alkylgruppen linear oder verzweigt sind, 3,6-Dioxa-1-heptyl, 3,6-Dioxa-1-octyl, 3,6-Dioxa-1-decyl, 3,6-Dioxa-1-dodecyl, 3,6,9-Trioxa-1-tridecyl und weiteren monofunktionellen Polyether-Resten enthaltend Repetiereinheiten ausgewählt aus 1,2-Ethylenoxy, 1,2-Propylenoxy, 1,3-Propylenoxy und 1,4-Butylenoxy.

Als monofunktioneller Polyether-Rest bevorzugt ist der Rest eines Alkanol-gestarteten Poly(oxy-1 ,2-propylen)monols mit einem mittleren Molekulargewicht Mₙ von 300 bis 2'000 g/mol, bevorzugt 500 bis 1'500 g/mol, insbesondere 500 bis 1'000 g/mol, nach Entfernung der Hydroxylgruppe, wobei Alkanol insbesondere für Butanol steht.

Mehr bevorzugt steht R¹ für einen linearen oder verzweigten Dodecyl-, Tridecyl-, Tetradecyl-, Pentadecyl- oder Hexadecyl-Rest.

Ganz besonders bevorzugt steht R¹ für einen linearen Dodecyl-Rest.

Weiterhin ganz besonders bevorzugt steht R¹ für ein technisches Gemisch aus verzweigten C₁₂₋₁₄-Alkyl-Resten.

Weiterhin ganz besonders bevorzugt steht R¹ für einen Butanol gestarteten Poly-(oxy-1,2-propylen)-Rest mit einem mittleren Molekulargewicht Mₙ von 500 bis 1'000 g/mol.

Bevorzugt steht R² für R¹.

Bevorzugt steht R³ für Ethyl oder tert.Butyl, insbesondere für Ethyl.

In einer besonders bevorzugten Ausführungsform der Erfindung umfasst der Stabilisator ein Gemisch von Malonaten der Formel (I), bei welchem ein Teil der Reste R² für R¹ steht und ein Teil der Reste R² nicht für R³ steht. Besonders bevorzugt stehen mindestens 10 %, mehr bevorzugt mindestens 20 %, mehr bevorzugt mindestens 40 %, insbesondere mindestens 60 %, der Reste R² für R¹.

Bevorzugt wird das Malonat der Formel (I) in einer solchen Menge eingesetzt, dass die Isocyanatgruppe-haltigen Zusammensetzung bezogen auf 100 Gewichtsteile der Isocyanatgruppen-haltigen Zusammensetzung 0.3 bis 15 meq, bevorzugt 0.5 bis 8 meq, insbesondere 1 bis 5 meq, Malonatgruppen aus Malonaten der Formel (I) enthält.

Bevorzugt umfasst das Malonat der Formel (I) ein Reaktionsprodukt erhalten aus der Umesterung von mindestens einem Malonat der Formel (II) mit mindestens einem Monoalkohol der Formel (III) unter Entfernung von Alkohol der Formel R³-OH, 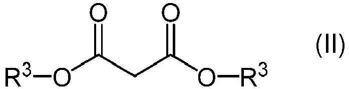 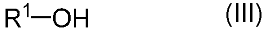 wobei R¹ und R³ die bereits beschriebenen Bedeutungen aufweist.

Geeignet als Malonat der Formel (II) ist Dimethylmalonat, Diethylmalonat, Diisopropylmalonat, Butylethylmalonat, tert.Butylethylmalonat oder Di-tert.butylmalonat. Bevorzugt als Malonat der Formel (II) ist Diethylmalonat oder Di-tert.butylmalonat, insbesondere Diethylmalonat.

Bevorzugt als Monoalkohol der Formel (III) ist lineares oder verzweigtes Octanol, Nonanol, Decanol, Undecanol, Dodecanol, Tridecanol, Tetradecanol, Pentadecanol, Hexadecanol, Heptadecanol oder Octadecanol, insbesondere lineares Dodecanol oder ein technisches Gemisch aus verzweigten C₁₂₋₁₄-Alkanolen.

Ein besonders geeignetes technisches Gemisch aus verzweigten C₁₂₋₁₄-Alkanolen ist Exxal ^{®} 13 (von ExxonMobil).

Weiterhin bevorzugt als Monoalkohol der Formel (III) ist Diethylenglykolethylether, Diethylenglykolbutylether, Diethylenglykolhexylether oder Triethylenglykolbutylether.

Weiterhin bevorzugt als Monoalkohol der Formel (III) ist ein Polyethermonol, insbesondere ein Alkanol-gestartetes Poly(oxy-1,2-propylen)monol mit einem mittleren Molekulargewicht Mₙ von 500 bis 1'500 g/mol, bevorzugt 500 bis 1'000 g/mol, wobei Alkanol insbesondere für Butanol steht.

Ein besonders geeignetes Butanol-gestartetes Poly(oxy-1,2-propylen)monol ist Synalox^{®} 100-20B (von Dow).

Die Umesterung erfolgt bevorzugt bei einer Temperatur von 80 bis 160 °C, insbesondere 100 bis 150 °C, gegebenenfalls in Anwesenheit eines geeigneten Katalysators, bevorzugt unter Vakuum und destillativer Entfernung des freigesetzten Alkohols R³-OH.

Die Umesterung erfolgt bevorzugt in einem molaren Verhältnis Monoalkohol der Formel (III) zu Malonat der Formel (II) im Bereich von 1 bis 2, bevorzugt 1.2 bis 2.0, mehr bevorzugt 1.5 bis 1.9, insbesondere 1.7 bis 1.9. Ein solches Reaktionsprodukt enthält typischerweise eine Mischung von Malonaten der Formel (I) mit R² = R¹ und Malonaten der Formel (I) mit R² = R³, und es enthält besonders wenig nicht umgesetzter Monoalkohol der Formel (III) und besonders wenig nicht umgesetztes Malonat der Formel (II).

Ein solches Reaktionsprodukt ist geruchsarm, nicht flüchtig und ermöglicht Isocyanatgruppen-haltige Zusammensetzungen mit guter Lagerstabilität, hoher Festigkeit und Elastizität und überraschend guten Haftungseigenschaften.

Im Fall von einem technischen Gemisch aus verzweigten C₁₂₋₁₄-Alkanolen und Diethylmalonat im Molverhältnis 1.8:1 und vollständiger Umesterung enthält das Reaktionsprodukt im Wesentlichen die folgenden Malonate (la) und (Ib) im Molverhältnis von etwa 80/20.

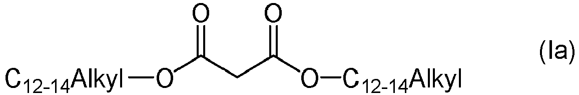

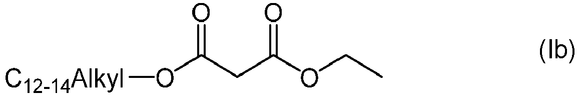

Das Malonat der Formel (I) wird verwendet als Stabilisator für die Lagerstabilität in Isocyanatgruppen-haltigen Zusammensetzungen.

Bevorzugt enthält die Isocyanatgruppen-haltige Zusammensetzung mindestens ein Isocyanatgruppen-haltiges Polymer, insbesondere mit einem NCO-Gehalt bezogen auf das gesamte Polymer von 0.5 bis 8 Gewichts-%, bevorzugt 0.75 bis 5 Gewichts-%, insbesondere 1 bis 3 Gewichts-%.

Bevorzugt handelt es sich bei der Isocyanatgruppen-haltigen Zusammensetzung um eine einkomponentige, feuchtigkeitshärtende Zusammensetzung. Darin liegen alle Inhaltsstoffe vermischt in einem einzigen, luftdichten Gebinde verpackt vor. Eine gute Lagerstabilität ist dabei von zentraler Bedeutung, so dass die Zusammensetzung auch nach längerer Lagerzeit von 3 bis 6 Monaten und mehr ohne Einbussen bei der Verarbeitbarkeit und den Endeigenschaften wie Festigkeit, Elastizität und Haftung eingesetzt werden kann. Bei der Applikation kommt die Isocyanatgruppen-haltige Zusammensetzung in Kontakt mit Feuchtigkeit aus der Luft und aus den Substraten, auf welche sie appliziert wurde, wodurch die Aushärtung erfolgt. Für eine besonders schnelle Aushärtung oder bei Applikation zwischen feuchtigkeitsdichte Substrate kann zusätzliche Feuchtigkeit zugeführt werden, beispielsweise durch Einmischen einer feuchtigkeitshaltigen sogenannten Booster-Komponente oder durch Bestreichen oder Besprühen der Substrate oder der applizierten Zusammensetzung mit Feuchtigkeit.

Ebenfalls möglich ist die Verwendung des Malonats der Formel (I) als Stabilisator in der Isocyanat-Komponente einer zweikomponentigen Zusammensetzung, wobei die Isocyanat-Komponente insbesondere ein Isocyanatgruppen-haltiges Polymer enthält. Eine solche zweikomponentige Zusammensetzung umfasst neben der Isocyanat-Komponente eine weitere Komponente, welche typischerweise Polyole, Amine und/oder latente Härter wie Aldimine, Ketimine, Enamine oder Oxazolidine enthält. Die beiden Komponenten sind getrennt voneinander verpackt lagerstabil und werden für die Applikation und Aushärtung vermischt, wobei die Isocyanatgruppen vor allem mit Reaktivgruppen aus der weiteren Komponente unter Vernetzung reagieren. Dabei verbessert das Malonat der Formel (I) die Lagerstabilität der Isocyanat-Komponente.

Ein weiterer Gegenstand der Erfindung ist eine härtbare Zusammensetzung enthaltend mindestens ein Isocyanatgruppen-haltiges Polymer und mindestens ein Malonat der Formel (I), erhalten aus der beschriebenen Verwendung von mindestens einem Malonat der Formel (I) als Stabilisator für die Lagerstabilität in Isocyanatgruppen-haltigen Zusammensetzungen.

Bevorzugt enthält die härtbare Zusammensetzung bezogen auf die gesamte Zusammensetzung 0.3 bis 15 meq, bevorzugt 0.5 bis 8 meq, insbesondere 1 bis 5 meq, Malonatgruppen aus Malonaten der Formel (I).

Bevorzugt ist das Isocyanatgruppen-haltige Polymer bei Raumtemperatur flüssig. Bevorzugt ist es niedrigviskos und hat insbesondere eine Viskosität von 0.5 bis 50 Pa s, bevorzugt 1 bis 30 Pa s, insbesondere 1 bis 20 Pa s, bestimmt bei 20 °C mittels Kegel-Platte-Viskosimeter mit Kegeldurchmesser 10 mm, Kegelwinkel 1° und Kegel-Platte-Abstand 0.05 mm bei einer Scherrate von 10 s⁻¹.

Bevorzugt hat das Isocyanatgruppen-haltige Polymer einen NCO-Gehalt bezogen auf das gesamte Polymer von 0.5 bis 8 Gewichts-%, bevorzugt 0.75 bis 5 Gewichts-%, insbesondere 1 bis 3 Gewichts-%. Der NCO-Gehalt wird insbesondere bestimmt durch Umsetzung der Isocyanatgruppen mit einem Überschuss Dibutylamin und Rücktitration des nicht umgesetzten Dibutylamins mit wässriger Salzsäure.

Bevorzugt hat das Isocyanatgruppen-haltige Polymer eine mittlere Isocyanat-Funktionalität von 1.7 bis 4.0, insbesondere 1.8 bis 3.0.

Bevorzugt hat das Isocyanatgruppen-haltige Polymer ein mittleres Molekulargewicht Mₙ von 1'000 bis 20'000 g/mol, 2'000 bis 15'000 g/mol, insbesondere 4'000 bis 10'000 g/mol.

Bevorzugt sind die Isocyanatgruppen des Isocyanatgruppen-haltigen Polymers abgeleitet von mindestens einem monomeren Diisocyanat ausgewählt aus der Liste bestehend aus 4,4'-Diphenylmethandiisocyanat, 2,4'-Diphenylmethandiisocyanat, 2,4-Toluendiisocyanat, 2,6-Toluendiisocyanat, 1,6-Hexandiisocyanat, Isophorondiisocyanat, 4,4'-Diisocyanatodicyclohexylmethan und 1-Methyl-2,4(6)-diisocyanatocyclohexan.

Besonders bevorzugt sind die Isocyanatgruppen abgeleitet von 4,4'-Diphenylmethandiisocyanat oder 2,4(6)-Toluendiisocyanat, insbesondere von 4,4'-Diphenylmethandiisocyanat. Diese Isocyanatgruppen sind besonders reaktiv und somit auch besonders kritisch in Bezug auf Lagerstabilität. Insbesondere 4,4'-Diphenylmethandiisocyanat ermöglicht dabei besonders schnell aushärtende Zusammensetzung mit besonders hoher Festigkeit bei hoher Elastizität.

Das Isocyanatgruppen-haltige Polymer wird bevorzugt durch Umsetzung von mindestens einem monomeren Diisocyanat mit mindestens einem Polyol in einem Molverhältnis NCO/OH von mindestens 1.3, bevorzugt mindestens 1.5, insbesondere mindestens 1.8, hergestellt, bevorzugt unter Ausschluss von Feuchtigkeit bei 20 bis 160 °C, insbesondere 40 bis 140 °C, gegebenenfalls in Anwesenheit eines geeigneten Katalysators.

Ein besonders bevorzugtes Isocyanatgruppen-haltiges Polymer hat bezogen auf das gesamte Polymer einen Gehalt an monomeren Diisocyanaten von weniger als 0.5 Gewichts-%, bevorzugt weniger als 0.2 Gewichts-%, insbesondere weniger als 0.1 Gewichts-%. Dies ermöglicht härtbare Zusammensetzungen mit einem Gehalt bezogen auf die gesamte Zusammensetzung von weniger als 0.1 Gewichts-% monomeren Diisocyanaten. Solche Zusammensetzungen weisen eine vorteilhafte EHS-Einstufung auf und sind besonders sicher im Gebrauch. Ein Isocyanatgruppen-haltiges Polymer mit besonders niedrigem Gehalt an monomeren Diisocyanaten wird bevorzugt hergestellt mit einem molaren NCO/OH Verhältnis von 3/1 bis 10/1, bevorzugt 3/1 bis 8/1, und nachfolgender Entfernung von nicht umgesetztem monomeren Diisocyanat mittels Destillation, bevorzugt mittels Dünnfilmdestillation oder Kurzwegdestillation, bevorzugt unter Vakuum.

Geeignet als monomeres Diisocyanat für die Herstellung des Isocyanatgruppen-haltigen Polymers sind handelsübliche aliphatische, cycloaliphatische oder aromatische Diisocyanate wie 1,6-Hexandiisocyanat (HDI), Isophorondiisocyanat (IPDI), 4,4'-Diisocyanatodicyclohexylmethan (H₁₂MDI), 1-Methyl-2,4(6)-diisocyanatocyclohexan (H₆TDI), 2,2(4),4-Trimethyl-1,6-hexandiisocyanat (TMDI), Cyclohexan-1,3-diisocyanat, Cyclohexan-1,4-diisocyanat, 1,3-Bis(isocyanatomethyl)-cyclohexan, 1,4-Bis(isocyanatomethyl)cyclohexan, m-Xylendiisocyanat, p-Xylendiisocyanat, 2,4(6)-Toluendiisocyanat (TDI), Diphenylmethandiisocyanat (MDI), 1,4-Phenylendiisocyanat (PDI) oder Naphthalin-1,5-diisocyanat (NDI).

Bevorzugt ist das monomere Diisocyanat ausgewählt aus der Liste bestehend aus 4,4'-Diphenylmethandiisocyanat, 2,4'-Diphenylmethandiisocyanat, 2,4-Toluendiisocyanat, 2,6-Toluendiisocyanat, 1,6-Hexandiisocyanat, Isophorondiisocyanat, 4,4'-Diisocyanatodicyclohexylmethan und 1-Methyl-2,4(6)-diisocyanatocyclohexan. Geeignete als Polyol für die Herstellung des Isocyanatgruppen-haltigen Polymers sind handelsübliche Polyole oder Mischungen davon, insbesondere
- Polyetherpolyole, insbesondere Polyoxyalkylendiole und/oder Polyoxyalkylentriole, wobei Triole bevorzugt gestartet sind auf 1,1,1-Trimethylolpropan oder Glycerin, sowie Polyetherpolyole mit darin dispergierten Polymerpartikeln, insbesondere solche mit Styrol-Acrylnitril-Partikeln (SAN) oder Polyharnstoff- bzw. Polyhydrazodicarbonamid-Partikeln (PHD),
- Polyesterpolyole, insbesondere aus der Polykondensation von Hydroxycarbonsäuren bzw. Lactonen oder der Polykondensation von aliphatischen und/oder aromatischen Polycarbonsäuren mit zwei- oder mehrwertigen Alkoholen, sowie Polyesterpolyole enthaltend Dimer- oder Trimerfettsäureester,
- Polycarbonatpolyole,
- Polyetherpolyesterpolyole,
- Polyacrylat- oder Polymethacrylatpolyole,
- polyhydroxyfunktionelle Fette oder Öle, beispielsweise natürliche Fette und Öle, insbesondere Ricinusöl; oder durch chemische Modifizierung von natürlichen Fetten und Ölen gewonnene - sogenannte oleochemische - Polyole,
- Polykohlenwasserstoffpolyole, insbesondere hydroxyfunktionelle Polyolefine, Polyisobutylene oder Polyisoprene, weiterhin hydroxyfunktionelle Ethylen-Propylen-Copolymere, Ethylen-Butylen- Copolymere oder Ethylen-Propylen-Dien-Copolymere, wie sie beispielsweise von der Firma Kraton Polymers hergestellt werden, weiterhin hydroxyfunktionelle Polymere von Dienen, insbesondere von 1,3-Butadien, weiterhin hydroxyfunktionelle Copolymere aus Dienen und Vinylmonomeren wie Styrol, Acrylnitril, Vinylchlorid, Vinylacetat, Vinylalkohol, Isobutylen oder Isopren, sowie hydrierte hydroxyfunktionelle Polymere oder Copolymere von Dienen.

Geeignet sind insbesondere auch Mischungen von Polyolen.

Bevorzugt sind Polyole mit einer mittleren OH-Funktionalität von 1.7 bis 3.

Bevorzugt sind Polyetherpolyole, Polyesterpolyole, Polycarbonatpolyole oder Polyacrylatpolyole. Besonders bevorzugt sind Polyetherpolyole oder Polyesterpolyole, insbesondere Polyetherpolyole.

Bevorzugt sind Polyetherpolyole mit Repetiereinheiten ausgewählt aus Oxy-1,2-propylen, Oxy-1,3-propylen, Oxy-1,4-butylen, Oxy-1,2-butylen und Oxyphenylethylen, wobei gegebenenfalls zusätzlich Oxy-1,2-ethylen vorhanden sind, insbesondere bis zu 25 Gewichts-% Oxy-1,2-ethylen-Einheiten bezogen auf das Polyetherpolyol.

Bevorzugt sind Polyetherpolyole mit einem niedrigen Gehalt an Ungesättigtheit (sogenannte "low monol" und "ultra low monol" Polyole), insbesondere von weniger als 0.02 meq/g, bevorzugt weniger als 0.01 meq/g.

Besonders bevorzugt sind Polyetherpolyole mit Oxy-1,2-propylen-Repetiereinheiten, gegebenenfalls mit bis zu 25 Gewichts-%, bezogen auf das Gesamtgewicht des Polyetherpolyols, Oxy-1,2-ethylen-Einheiten an den Kettenenden (auch "Ethylenoxid-terminierte" oder "EO-terminierte" Polyetherpolyole genannt).

Besonders bevorzugt sind Poly(oxy-1,2-propylen)diole oder -triole, welche gegebenenfalls EO-terminiert sind, mit einer OH-Zahl von 7 bis 175 mg KOH/g, bevorzugt 10 bis 145 mg KOH/g, insbesondere 14 bis 112 mg KOH/g.

Besonders bevorzugt sind Poly(oxy-1,2-propylen)diole oder -triole, welche gegebenenfalls EO-terminiert sind, mit einem mittleren Molekulargewicht Mₙ von 1'000 bis 12'000 g/mol, bevorzugt 2'000 bis 8'000 g/mol.

Besonders bevorzugt enthält die härtbare Zusammensetzung mindestens ein Isocyanatgruppen-haltiges Polymer mit Polyetherketten und einem NCO-Gehalt bezogen auf das gesamte Polymer von 1 bis 3 Gewichts-%.

Die härtbare Zusammensetzung kann mehr als ein Isocyanatgruppen-haltiges Polymer enthalten.

Eine als Scheibenklebstoff besonders geeignete härtbare Zusammensetzung enthält bevorzugt neben ein oder mehreren Isocyanatgruppen-haltigen Polymeren mit Polyetherketten und einem NCO-Gehalt bezogen auf das gesamte Polymer von 1 bis 3 Gewichts-% mindestens ein weiteres Isocyanatgruppen-haltiges Polymer.

Als weiteres Isocyanatgruppen-haltiges Polymer geeignet ist insbesondere ein bei Raumtemperatur festes Polymer basierend auf mindestens einem teilkristallinen Polyesterpolyol, wobei ein solches Polymer insbesondere die Verarbeitbarkeit der härtbaren Zusammensetzung in Bezug auf Standfestigkeit der frisch applizierten, noch nicht ausgehärteten Zusammensetzung verbessert.

Als weiteres Isocyanatgruppen-haltiges Polymer geeignet ist weiterhin insbesondere ein Polymer basierend auf mindestens einem Dimerfettsäureester enthaltendem Polyol. Ein solches Polymer ermöglicht besonders gute Haftungseigenschaften.

Solche weitere Polymere sind in Bezug auf das Gesamtgewicht aller Isocyanatgruppen-haltigen Polymere bevorzugt in einer Menge von bis zu 10 Gewichts-% pro weiteres Polymer enthalten.

In einer bevorzugten Ausführungsform der Erfindung enthält die härtbare Zusammensetzung mindestens einen latenten, mit Feuchtigkeit aktivierbaren Härter, insbesondere mindestens ein Aldimin, bevorzugt in einer solchen Menge, dass das molare Verhältnis der Aldimingruppen zu den Isocyanatgruppen in der gesamten Zusammensetzung im Bereich von 0.2 bis 1.0, insbesondere 0.5 bis 0.9, liegt.

Bevorzugt ist ein Aldimin der Formel (IV) wobei 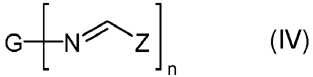
n für 2 oder 3 steht,
G für einen n-wertigen organischen Rest mit 2 bis 25 C-Atomen steht, und
Z für einen einwertigen, gegebenenfalls Ethergruppen, Estergruppen und/oder tertiäre Amingruppen enthaltenden Kohlenwasserstoffrest mit 3 bis 20 C-Atomen steht.

Bevorzugt steht G für den Rest eine Diamins oder Triamins ausgewählt aus der Liste bestehend aus 1,5-Pentandiamin, 1,6-Hexandiamin, Isophorondiamin, 4,4'-Methylen-bis(cyclohexylamin), 1,3-Bis(aminomethyl)cyclohexan, Polyoxypropylendiamin mit mittlerem Molekulargewicht Mₙ von 200 bis 500 g/mol und Polyoxypropylentriamin mit mittlerem Molekulargewicht Mₙ von 300 bis 500 g/mol nach Entfernung der zwei oder drei Amingruppen.

Bevorzugt steht Z für einen Rest ausgewählt aus der Liste bestehend aus 2-Propyl, 1,1-dimethyl-2-acetoxyethyl, 1,1-dimethyl-2-lauroyloxyethyl, 1,1-dimethyl-2-(N-morpholino)ethyl, Phenyl, Methylphenyl, Methoxyphenyl und 4-C₁₀₋₁₄-alkylphenyl.

Besonders bevorzugt sind Aldimine der Formel (IV) ausgewählt aus der Liste bestehend aus N,N'-Bis(2,2-dimethyl-3-lauroyloxypropyliden)hexan-1,6-diamin, N,N'-Bis(2,2-dimethyl-3-(N-morpholino)propyliden)hexan-1,6-diamin, N,N'-Bis(2,2-dimethyl-3-acetoxypropyliden)-3-aminomethyl-3,5,5-trimethylcyclohexylamin, N,N'-Bis(2,2-dimethyl-3-lauroyloxypropyliden)-3-aminomethyl-3,5,5-trimethylcyclohexylamin, N,N'-Bis(2,2-dimethyl-3-(N-morpholino)propyliden)-3-aminomethyl-3,5,5-trimethylcyclohexylamin, N,N'-Bis(4-C₁₀₋₁₄-alkylbenzyliden)-3-aminomethyl-3,5,5-trimethylcyclohexylamin, N,N'-Bis(2,2-dimethyl-3-lauroyloxypropyliden)polyoxy-propylendiamin mit mittlerem Molekulargewicht Mₙ von 750 bis 1'050 g/mol, N,N',N"-Tris(2,2-dimethyl-3-lauroyloxypropyliden)polyoxypropylentriamin mit mittlerem Molekulargewicht Mₙ von 1'125 bis 1'325 g/mol und N,N'-Dibenzyliden-polyoxypropylendiamin mit mittlerem Molekulargewicht Mₙ von 400 bis 700 g/mol.

Die härtbare Zusammensetzung enthält bevorzugt mindestens einen weiteren Bestandteil ausgewählt aus Füllstoffen, Weichmachern, Katalysatoren und Haftvermittlern.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, calcinierte Kaoline, Schichtsilikate wie Glimmer oder Talk, Zeolithe, Aluminiumhydroxide, Magnesiumhydroxide, Kieselsäuren inklusive hochdisperse Kieselsäuren aus Pyrolyseprozessen, industriell hergestellte Russe, Graphit, MetallPulver beispielsweise von Aluminium, Kupfer, Eisen, Silber oder Stahl, PVC-Pulver oder Hohlkugeln.

Bevorzugt sind Calciumcarbonate, welche gegebenenfalls mit Fettsäuren, insbesondere Stearaten, beschichtet sind, calcinierte Kaoline und/oder industriell hergestellte Russe.

Geeignete Weichmacher sind insbesondere Phthalate wie insbesondere Diisononylphthalat (DINP), Diisodecylphthalat (DIDP) oder Di(2-propylheptyl)phthalat (DPHP), hydrierte Phthalate wie insbesondere Diisononyl-1,2-cyclohexandi-carboxylat (DINCH), Terephthalate wie insbesondere Bis(2-ethylhexyl)terephthalat oder Diisononylterephthalat (DINT), hydrierte Terephthalate wie insbesondere Bis-(2-ethylhexyl)-1,4-cyclohexandicarboxylat oder Diisononyl-1,4-cyclohexandicar-boxylat, Isophthalate, Trimellitate, Adipate wie insbesondere Dioctyladipat (DOA), Azelate, Sebacate, Citrate, Benzoate, Glycolether, Glycolester, Weichmacher mit Polyetherstruktur, insbesondere Poly(oxy-1,2-propylen)-monole, -diole oder-triole mit blockierten Hydroxylgruppen, insbesondere in der Form von Acetylgruppen, organische Sulfonate oder Phosphate insbesondere Diphenylkresylphosphat (DPK), Polybutene, Polyisobutene oder von natürlichen Fetten oder Ölen abgeleitete Weichmacher wie insbesondere epoxidiertes Soja- oder Leinöl oder Rapsölmethylester, wobei Phthalate, hydrierte Phthalate, Adipate oder Weichmacher mit Polyetherstruktur bevorzugt sind.

Geeignete Katalysatoren sind insbesondere tertiäre Aminogruppen enthaltende Verbindungen wie insbesondere 2,2'-Dimorpholinodiethylether (DMDEE), sowie Organozinn(IV)-Verbindungen wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Komplexverbindungen von Bismut(III) oder Zirkonium(IV), insbesondere mit Liganden ausgewählt aus Alkoholaten, Carboxylaten, 1,3-Diketonaten, Oxinat, 1,3-Ketoesteraten und 1,3-Ketoamidaten, sowie für den Fall, dass die härtbare Zusammensetzung Aldimine enthält, organische Säuren welche die Hydrolyse von Aldiminen beschleunigen, wie insbesondere Carbonsäuren oder Sulfonsäuren, insbesondere eine aromatische Carbonsäure wie Salicylsäure.

Geeignete Haftvermittler sind insbesondere Titanate oder Organoalkoxysilane wie insbesondere Epoxysilane, Aminosilane, Iminosilane, Mercaptosilane, Vinylsilane, (Meth)acrylosilane, Carbamatosilane, Alkylsilane, S-(Alkylcarbonyl)mercaptosilane oder oligomere Formen dieser Silane. Besonders bevorzugt sind Epoxysilane, insbesondere 3-Glycidoxypropyltrimethoxysilan oder 3-Glycidoxypropyltriethoxysilan.

Die härtbare Zusammensetzung kann zusätzlich weitere Bestandteile enthalten, insbesondere:
- oligomere Diisocyanate, insbesondere bei Raumtemperatur flüssige Gemische aus MDI und MDI-Homologen (polymeres MDI bzw. PMDI), HDI-Biurete wie Desmodur^{®} N 100 oder N 3200 (von Covestro), Tolonate^{®} HDB oder HDB-LV (von Vencorex) oder Duranate^{®} 24A-100 (von Asahi Kasei), HDI-Isocyanurate wie Desmodur^{®} N 3300, N 3600 oder N 3790 BA (alle von Covestro), Tolonate^{®} HDT, HDT-LV oder HDT-LV2 (von Vencorex), Duranate^{®} TPA-100 oder THA-100 (von Asahi Kasei) oder Coronate^{®} HX (von Nippon Polyurethane), HDI-Uretdione wie Desmodur^{®} N 3400 (von Covestro), HDI-Iminooxadiazindione wie Desmodur^{®} XP 2410 (von Covestro), HDI-Allophanate wie Desmodur^{®} VP LS 2102 (von Covestro), IPDI-Isocyanurate wie beispielsweise in Lösung als Desmodur^{®} Z 4470 (von Covestro) oder in fester Form als Vestanat^{®} T1890/100 (von Evonik), TDI-Oligomere wie Desmodur^{®} IL (von Covestro), oder gemischte Isocyanurate auf Basis TDI/HDI wie Desmodur^{®} HL (von Covestro);
- weitere latente Härter, insbesondere Oxazolidine oder Ketimine;
- Pigmente, insbesondere Titandioxid, Chromoxid, Eisenoxide oder organische Pigmente;
- Farbstoffe;
- Fasern, insbesondere Glasfasern, Kohlefasern, Metallfasern, Keramikfasern, Hanffasern, Zellulosefasern oder Kunststofffasern wie Polyamidfasern oder Polyethylenfasern;
- Nanofüllstoffe oder Nanofasern wie Graphen oder Carbon Nanotubes;
- Lösemittel;
- Modifizierungsmittel wie Kohlenwasserstoffharze, natürliche oder synthetische Wachse oder Bitumen;
- Rheologie-Modifizierer, insbesondere Harnstoffverbindungen, Schichtsilikate wie Bentonite, Derivate von Ricinusöl, hydriertes Ricinusöl, Polyamide, Polyurethane, pyrogene Kieselsäuren oder hydrophob modifizierte Polyoxyethylene;
- Trocknungsmittel, insbesondere Molekularsiebe, Calciumoxid, hochreaktive Isocyanate wie p-Tosylisocyanat, Mono-Oxazolidine wie Incozol^{®} 2 (von Incorez) oder Orthoester;
- nicht-reaktive thermoplastische Polymere, insbesondere Homo- oder Copolymere von ungesättigten Monomeren, insbesondere aus der Gruppe umfassend Ethylen, Propylen, Butylen, Isobutylen, Isopren, Styrol, Vinylacetat und Alkyl-(meth)acrylate, insbesondere Polyethylene (PE), Polypropylene (PP), Polyisobutylene, Ethylenvinylacetat-Copolymere (EVA) und ataktische Poly-α-Olefine (APAO);
- flammhemmende Substanzen, insbesondere die bereits genannten Füllstoffe Aluminiumhydroxid oder Magnesiumhydroxid, organische Phosphorsäureester, Ammoniumpolyphosphate, Melamin oder Derivate davon, Borverbindungen oder Antimonverbindungen;
- Additive, insbesondere Netzmittel, Verlaufmittel, Entschäumer, Entlüfter, Stabilisatoren gegen Oxidation, Wärme, Licht oder UV-Strahlung oder Biozide;
sowie weitere üblicherweise in härtbaren Zusammensetzungen eingesetzte Substanzen.

Es kann sinnvoll sein, gewisse Substanzen vor dem Einmischen in die Zusammensetzung chemisch oder physikalisch zu trocknen.

Die härtbare Zusammensetzung enthält bezogen auf die gesamte Zusammensetzung bevorzugt weniger als 5 Gewichts-%, besonders bevorzugt weniger als 2 Gewichts-%, insbesondere weniger als 1 Gewichts-%, flüchtige organische Verbindungen (VOC) mit einem Siedepunkt bei Normaldruck von weniger als 250 °C. Eine solche Zusammensetzung verursacht besonders wenig Emissionen.

Bevorzugt enthält die härtbare Zusammensetzung bezogen auf die gesamte Zusammensetzung
- 10 bis 80 Gewichts-%, bevorzugt 30 bis 70 Gewichts-%, Isocyanatgruppen-haltige Polymere,
- 10 bis 80 Gewichts-%, bevorzugt 20 bis 70 Gewichts-%, Füllstoffe,
- 0 bis 60 Gewichts-%, bevorzugt 10 bis 50 Gewichts-%, Weichmacher,
sowie mindestens ein Malonat der Formel (I), bevorzugt mindestens einen Katalysator, bevorzugt mindestens ein Organoalkoxysilan und gegebenenfalls weitere Bestandteile.

Die härtbare Zusammensetzung wird insbesondere unter Ausschluss von Feuchtigkeit hergestellt und bei Umgebungstemperatur in feuchtigkeitsdichten Gebinden gelagert. Ein geeignetes feuchtigkeitsdichtes Gebinde besteht insbesondere aus einem gegebenenfalls beschichteten Metall und/oder Kunststoff und ist insbesondere ein Fass, ein Container, ein Hobbock, ein Eimer, ein Kanister, eine Büchse, ein Beutel, ein Schlauchbeutel, eine Kartusche oder eine Tube.

Die härtbare Zusammensetzung kann in Form einer einkomponentigen oder in Form einer mehrkomponentigen, insbesondere zweikomponentigen, Zusammensetzung vorliegen.

Als "einkomponentig" wird eine Zusammensetzung bezeichnet, bei welcher alle Bestandteile der Zusammensetzung im gleichen Gebinde vorliegen und welche als solche lagerstabil ist.

Als "zweikomponentig" wird eine Zusammensetzung bezeichnet, bei welcher die Bestandteile der Zusammensetzung in zwei verschiedenen Komponenten vorliegen, welche in voneinander getrennten Gebinden gelagert und erst kurz vor oder während der Applikation der Zusammensetzung miteinander vermischt werden.

Bevorzugt ist die härtbare Zusammensetzung einkomponentig.

Als "einkomponentig" wird eine härtbare Zusammensetzung bezeichnet, deren Inhaltsstoffe vermischt in einem einzigen luftdichten Gebinde lagerstabil aufbewahrt werden.

Bei der Applikation der härtbaren Zusammensetzung beginnt der Prozess der Aushärtung. Als Ergebnis davon entsteht die ausgehärtete Zusammensetzung.

Im Fall einer einkomponentigen Zusammensetzung wird diese als solche appliziert und beginnt darauf unter dem Einfluss von Feuchtigkeit bzw. Wasser auszuhärten. Zur Beschleunigung der Aushärtung kann der Zusammensetzung bei der Applikation eine Beschleuniger-Komponente, welche Wasser und/oder einen Katalysator und/oder einen Härter enthält oder freisetzt, zugemischt werden, oder die Zusammensetzung kann nach ihrer Applikation mit einer solchen Beschleuniger-Komponente in Kontakt gebracht werden.

Bei der Aushärtung reagieren die Isocyanatgruppen unter dem Einfluss von Feuchtigkeit untereinander. Für den Fall, dass die härtbare Zusammensetzung ein Aldimin enthält, reagieren die Isocyanatgruppen zudem mit den hydrolysierenden Aldimingruppen. Die Gesamtheit dieser zur Aushärtung der Zusammensetzung führenden Reaktionen der Isocyanatgruppen wird auch als Vernetzung bezeichnet.

Die zur Aushärtung benötigte Feuchtigkeit gelangt bevorzugt aus der Luft (Luftfeuchtigkeit) durch Diffusion in die Zusammensetzung. Dabei bildet sich an den mit Luft in Kontakt stehenden Oberflächen der Zusammensetzung zuerst eine Haut. Die Aushärtung setzt sich entlang der Diffusionsrichtung von aussen nach innen fort, wobei die Haut zunehmend dicker wird und schliesslich die ganze applizierte Zusammensetzung umfasst. Die Feuchtigkeit kann zusätzlich oder vollständig auch aus einem oder mehreren Substraten, auf welche die Zusammensetzung appliziert wurde, in die Zusammensetzung gelangen und/oder aus einer Beschleuniger-Komponente stammen, welche der Zusammensetzung bei der Applikation zugemischt oder nach der Applikation mit dieser in Kontakt gebracht wird, beispielsweise durch Bestreichen oder Besprühen.

Die härtbare Zusammensetzung wird bevorzugt bei Umgebungstemperatur appliziert, insbesondere im Bereich von etwa -10 bis 50°C, bevorzugt -5 bis 45°C, insbesondere 0 bis 40°C.

Die Aushärtung der härtbaren Zusammensetzung erfolgt bevorzugt ebenfalls bei Umgebungstemperatur.

Die härtbare Zusammensetzung verfügt über eine sehr gute Lagerstabilität, eine lange Verarbeitungszeit (Offenzeit), eine schnelle Aushärtung, eine hohe Elastizität bei hoher Festigkeit und gute Haftungseigenschaften, insbesondere auf Glas und Glaskeramik.

Bevorzugt wird die härtbare Zusammensetzung verwendet als elastischer Klebstoff oder elastischer Dichtstoff oder elastische Beschichtung, insbesondere als elastischer Klebstoff, wobei dieser insbesondere auch als Dichtstoff wirkt.

Als Klebstoff und/oder Dichtstoff ist die härtbare Zusammensetzung insbesondere geeignet für Klebe- und Abdichtungsanwendungen in der Bau- und Fertigungsindustrie oder im Fahrzeugbau, insbesondere für die Parkettverklebung, Montage, Anbauteilverklebung, Modulverklebung, Scheibenverklebung, Fugenabdichtung, Karosserieabdichtung, Nahtabdichtung oder Hohlraumversiegelung.

Elastische Verklebungen im Fahrzeugbau sind beispielsweise das Ankleben von Teilen wie Kunststoffabdeckungen, Zierleisten, Flansche, Stossstangen, Führerkabinen oder andere Anbauteile an die lackierte Karosserie eines Fahrzeugs, oder insbesondere das Einkleben von Scheiben in die Karosserie, wobei die Fahrzeuge insbesondere Automobile, Lastkraftwagen, Busse, Schienenfahrzeuge oder Schiffe darstellen.

Als Dichtstoff ist die härtbare Zusammensetzung insbesondere geeignet für das elastische Abdichten von Fugen, Nähten oder Hohlräumen aller Art, insbesondere von Fugen am Bau wie Dilatationsfugen oder Anschlussfugen zwischen Bauteilen, oder von Bodenfugen im Tiefbau.

Als Beschichtung ist die härtbare Zusammensetzung insbesondere geeignet zum Schutz und/oder zum Abdichten von Bauwerken oder Teilen davon, insbesondere im Bereich von Materialien aus Kunststoff insbesondere für Balkone, Terrassen, Dächer, insbesondere Flachdächer oder schwach geneigte Dachfläche oder Dachgärten, oder im Innern von Gebäuden unter Fliesen oder Keramikplatten in Nasszellen oder Küchen, oder in Auffangwannen, Kanälen, Schächten, Silos, Tanks oder Abwasserbehandlungsanlagen.

Die härtbare Zusammensetzung kann so formuliert sein, dass sie eine pastöse Konsistenz mit strukturviskosen Eigenschaften aufweist. Eine solche Zusammensetzung wird mittels einer geeigneten Vorrichtung appliziert, beispielsweise aus handelsüblichen Kartuschen oder Fässern oder Hobbocks, beispielsweise in Form einer Raupe, wobei diese eine im Wesentlichen runde oder dreieckige Querschnittsfläche aufweisen kann.

Die härtbare Zusammensetzung kann weiterhin so formuliert sein, dass sie flüssig und sogenannt selbstverlaufend oder nur leicht thixotrop ist und zur Applikation ausgegossen werden kann. Als Beschichtung kann sie beispielsweise anschliessend flächig bis zur erwünschten Schichtdicke verteilt werden, beispielsweise mittels einer Rolle, einem Schieber, einer Zahntraufel oder einer Spachtel. Dabei wird in einem Arbeitsgang typischerweise eine Schichtdicke im Bereich von 0.5 bis 3 mm, insbesondere 1 bis 2.5 mm, aufgetragen.

Geeignete Substrate, welche mit der härtbaren Zusammensetzung verklebt, abgedichtet oder beschichtet werden können, sind insbesondere
- Glas, Glaskeramik, Beton, Mörtel, Zementestrich, Faserzement, insbesondere Faserzement-Platten, Backstein, Ziegel, Gips, insbesondere Gips-Platten oder Anhydrid-Estrich, oder Natursteine wie Granit oder Marmor;
- Metalle oder Legierungen wie Aluminium, Kupfer, Eisen, Stahl, Buntmetalle, inklusive oberflächenveredelte Metalle oder Legierungen wie verzinkte oder verchromte Metalle;
- beschichtete oder lackierte Substrate, insbesondere lackierte Fliesen, gestrichener Beton, pulverbeschichtete Metalle oder Legierungen oder lackierte Bleche;
- Farben oder Lacke, insbesondere Automobildecklacke;
- Kunststoffe wie insbesondere Hart- oder Weich-PVC, Polycarbonat, Polystyrol, Polyester, Polyamid, PMMA, ABS, SAN, Epoxidharze, Phenolharze, PUR, POM, TPO, PE, PP, EPM, EPDM oder Blends von Polycarbonat, sowie weitere Kunststoffe wie insbesondere ABS und/oder SAN, wobei diese Kunststoffe jeweils unbehandelt oder oberflächenbehandelt, beispielsweise mittels Plasma, Corona oder Flammen, vorliegen können, sowie faserverstärkte Kunststoffe wie insbesondere Kohlefaser-verstärkte Kunststoffe (CFK), Glasfaser-verstärkte Kunststoffe (GFK) oder Sheet Moulding Compounds (SMC);
- Reparatur- oder Nivelliermassen auf Basis PCC (Polymer-modifizierter Zementmörtel) oder ECC (Epoxidharz-modifizierter Zementmörtel);
- Asphalt oder Bitumen;
- Leder, Textilien, Papier, Holz, mit Harzen wie Phenol-, Melamin- oder Epoxidharzen gebundene Holzwerkstoffe, Harz-Textil-Verbundwerkstoffe oder weitere sogenannte Polymer-Composites;
- Isolierschäume, insbesondere aus EPS, XPS, PUR, PIR, Steinwolle, Glaswolle oder geschäumtem Glas (Foamglas).

Die Substrate können bei Bedarf vor dem Applizieren vorbehandelt werden, insbesondere durch physikalische und/oder chemische Reinigungsverfahren oder das Aufbringen eines Aktivators oder eines Primers.

Verklebt und/oder abgedichtet werden können zwei gleichartige oder zwei verschiedene Substrate.

Bevorzugt weist die härtbare Zusammensetzung eine pastöse Konsistenz auf und wird verwendet als Klebstoff in der Fahrzeugindustrie, insbesondere für die Scheibenverklebung, insbesondere ohne Vorbehandlung der Substrate mittels Primer.

Ein weiterer Gegenstand der Erfindung ist die ausgehärtete Zusammensetzung, erhalten aus der beschriebenen härtbaren Zusammensetzung nach dem Kontakt mit Feuchtigkeit.

Bevorzugt ist die ausgehärtete Zusammensetzung elastisch und weist insbesondere eine Zugfestigkeit von mindestens 2 MPa, bevorzugt mindestens 3 MPa, und eine Bruchdehnung von mindestens 150 %, bevorzugt mindestens 300 %, auf, bestimmt gemäss DIN EN 53504 bei einer Zuggeschwindigkeit von 200 mm/min an hantelförmigen Prüfkörpern mit Länge 75 mm, Steglänge 30 mm, Stegbreite 4 mm und Dicke 2 mm.

Bevorzugt wird die härtbare Zusammensetzung eingesetzt in einem Verfahren zum Verkleben oder Abdichten, umfassend die Schritte
(i) Applizieren der härtbaren Zusammensetzung
   - auf ein erstes Substrat und Kontaktieren der Zusammensetzung mit einem zweiten Substrat innerhalb der Offenzeit der Zusammensetzung, oder
   - auf ein erstes und auf ein zweites Substrat und Fügen der beiden Substrate innerhalb der Offenzeit der Zusammensetzung, oder
   - zwischen zwei Substrate,
(ii) Aushärten der Zusammensetzung durch Kontakt mit Feuchtigkeit.

Aus dem Verfahren zum Verkleben oder Abdichten wird ein verklebter oder abgedichteter Artikel erhalten. Dieser Artikel kann ein Bauwerk oder ein Teil davon sein, insbesondere ein Bauwerk des Hoch- oder Tiefbaus, ein Dach, ein Treppenhaus oder eine Fassade, oder er kann ein industrielles Gut oder ein Konsumgut sein, insbesondere ein Fenster, eine Lampe, eine Verkehrsampel, eine Haushaltmaschine oder ein Transportmittel wie insbesondere ein Automobil, ein Bus, ein Caravan, ein Lastkraftwagen, ein Schienenfahrzeug, ein Schiff, ein Flugzeug oder ein Helikopter, oder ein Anbauteil davon.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

Die **Viskosität** wurde mit einem thermostatisierten Kegel-Platten-Viskosimeter Rheotec RC30 (Kegeldurchmesser 25 mm, Kegelwinkel 1°, Kegelspitze-PlattenAbstand 0.05 mm, Scherrate 10 s⁻¹) gemessen.

Der **Gehalt an monomerem Diisocyanat** wurde mittels HPLC (Detektion über Photodiodenarray; 0.04 M Natriumacetat / Acetonitril als mobile Phase) nach vorgängiger Derivatisierung mittels N-Propyl-4-nitrobenzylamin bestimmt.

### Herstellung von Malonat-Verbindungen

### Malonat M1

72.13 g (0.36 mol OH) C₁₂₋₁₄-Alkylalkohol (Exxal^{®} 13, OH-Zahl 280 mg KOH/g, von ExxonMobil) wurde mit 32.03 g (0.2 mol) Diethylmalonat und 0.15 g Tetra-n-butyltitanat (Tyzor^{®} TnBT, von Dorf Ketal) unter Vakuum und Entfernung der flüchtigen Bestandteile, insbesondere Ethanol, bei einer Temperatur von 140 °C umgesetzt. Erhalten wurde eine klare, farblose Flüssigkeit mit einem berechneten Malonat-Equivalentgewicht von 439 g/eq.

### Malonat M2

135.0 g (0.18 mol OH) Butanol-gestartetes Polyoxypropylen-Monol (Synalox^{®} 100-20B, mittleres Molekulargewicht Mₙ ca. 750 g/mol, von Dow) wurde mit 16.0 g (0.1 mol) Diethylmalonat und 0.1 g Tetra-n-butyltitanat (Tyzor^{®} TnBT, von Dorf Ketal) unter Vakuum und Entfernung der flüchtigen Bestandteile bei einer Temperatur von 140 °C umgesetzt. Erhalten wurde eine klare, farblose Flüssigkeit mit einem berechneten Malonat-Equivalentgewicht von 1427 g/eq.

### Herstellung von Isocyanatgruppen-haltigen Polymeren:

### Polymer P1:

725 g Ethylenoxid-terminiertes Polyoxypropylentriol (Desmophen^{®} 5031 BT, OH-Zahl 28.0 mg KOH/g, OH-Funktionalität ca. 2.3, von Covestro) und 275 g 4,4'-Diphenylmethandiisocyanat (Desmodur^{®} 44 MC L, von Covestro) wurden bei 80 °C nach bekanntem Verfahren zu einer Reaktionsmischung mit einem NCO-Gehalt von 7.6 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar), wobei ein Polymer mit einem NCO-Gehalt von 1.7 Gewichts-%, einer Viskosität bei 20 °C von 19 Pa s und einem Gehalt an monomerem 4,4'-Diphenylmethandiisocyanat von 0.04 Gewichts-% erhalten wurde.

### Polymer P2:

513.3 g Polyoxypropylendiol (Acclaim^{®} 4200, OH-Zahl 28 mg KOH/g, von Covestro), 256.7 g Ethylenoxid-terminiertes Polyoxypropylentriol (Caradol^{®} MD34-02, OH-Zahl 35 mg KOH/g, von Shell) und 64.2 g Toluendiisocyanat (Desmodur^{®} T 80 P, von Covestro) wurden bei 80 °C nach bekanntem Verfahren zu einem Polymer mit einem NCO-Gehalt von 1.5 Gewichts-% und einer Viskosität bei 20 °C von 22 Pa s umgesetzt.

### Polymer P3:

597.5 g Dimerfettsäure-basiertes amorphes Polyesterdiol (Priplast^{®} 1838, OH-Zahl 110 mg KOH/g, von Cargill) und 402.5 g 4,4'-Diphenylmethandiisocyanat (Desmodur^{®} 44 MC L, von Covestro) wurden bei 80 °C zu einer Reaktionsmischung mit einem NCO-Gehalt von 11.0 Gewichts-% umgesetzt. Anschliessend wurden die flüchtigen Bestandteile, insbesondere nicht umgesetztes 4,4'-Diphenylmethandiisocyanat, in einem Kurzwegverdampfer destillativ entfernt (Manteltemperatur 180 °C, Druck 0.1 bis 0.005 mbar), wobei ein Polymer mit einem NCO-Gehalt von 2.8 Gewichts-%, einer Viskosität bei 20 °C von 312 Pa s und einem Gehalt an monomerem 4,4'-Diphenylmethandiisocyanat von 0.09 Gewichts-% erhalten wurde.

### Polymer P4:

1000.0 g teilkristallines Polyesterdiol (Dynacoll^{®} 7360, OH-Zahl 34 mg KOH/g, von Evonik) und 142 g 4,4'-Diphenylmethandiisocyanat (Desmodur^{®} 44 MC L, von Covestro) wurden bei 80 °C zu einem bei Raumtemperatur festen Polymer mit einem NCO-Gehalt von 2.0 Gewichts-% umgesetzt.

Herstellung von feuchtigkeitshärtbaren Zusammensetzungen:

### Zusammensetzungen Z-1 bis Z-4:

Für jede Zusammensetzung wurden die in Tabelle 1 angegebenen Inhaltsstoffe in den angegebenen Mengen (in Gewichtsteilen) mittels eines Planetenmischers unter Vakuum und Feuchtigkeitsausschluss gut vermischt, die Zusammensetzung in Aluminiumkartuschen abgefüllt und luftdicht verschlossenen bei Raumtemperatur aufbewahrt.

Das Polymer **P4** wurde vor der Zugabe geschmolzen.

Als "Epoxysilan" wurde 3-Glycidoxypropyltrimethoxysilan (Silquest^{®} A-187 von Momentive) eingesetzt.

Als "Kreide" wurde Omyacarb^{®} 5-GU (von Omya) eingesetzt.

Als "Russ" wurde Monarch^{®} 570 (von Cabot) eingesetzt.

Als "Katalysatorlösung" wurde eine Lösung von 1 Gew.% Dibutylzinndilaurat (DBTDL) und 12 Gew.% 2,2'-Dimorpholinodiethylether (DMDEE) in Dioctyladipat eingesetzt.

Anschliessend wurde jede Zusammensetzung folgendermassen geprüft:
Als Mass für Lagerstabilität wurde die **Auspresskraft** nach Lagerung einer verschlossenen Kartusche während 3 Tagen bei Raumtemperatur bzw. während 7 bzw. 14 Tagen in einem Umluftofen bei 60 °C bestimmt. Die bei 60 °C gelagerten Kartuschen wurden vor der Bestimmung der Auspresskraft auf Raumtemperatur abgekühlt. Die Auspresskraft wurde mittels eines Auspressgeräts (Zwick/Roell Z005) gemessen, indem eine Düse mit 5 mm Innendurchmesser auf die Kartusche aufgeschraubt und die benötigte Kraft gemessen wurde, um die Zusammensetzung mit einer Auspressgeschwindigkeit von 60 mm/min durch die Düse auszupressen. Der angegebene Wert ist ein Mittelwert aus den Kräften, die nach einem Auspressweg von 22 mm, 24 mm, 26 mm und 28 mm gemessen wurden. Ein geringer Anstieg der Auspresskraft nach Lagerung bei 60 °C im Vergleich zum Anfangswert nach 3 Tagen bei Raumtemperatur entspricht einer guten Lagerstabilität.

Als Mass für die Verarbeitungszeit (Offenzeit) wurde die **Hautbildungszeit** bestimmt. Dazu wurden einige Gramm der Zusammensetzung in einer Schichtdicke von ca. 2 mm auf Pappkarton aufgetragen und im Normklima die Zeitdauer bestimmt, bis beim leichten Antippen der Oberfläche der Zusammensetzung mittels einer Pipette aus LDPE erstmals keine Rückstände auf der Pipette mehr zurückblieben. Die Hautbildungszeit wurde mit dem 3 Tage bei Raumtemperatur gelagerten Material und mit dem 7 bzw. 14 Tage bei 60 °C gelagerten Material bestimmt. Ein konstanter Wert für die Hautbildungszeit ist ein weiterer Hinweis auf eine gute Lagerstabilität der Zusammensetzung.

Zur Bestimmung der mechanischen Eigenschaften wurde jede Zusammensetzung zwischen zwei silikonbeschichteten Trennpapieren zu einem Film von 2 mm Dicke verpresst und während 7 Tagen im Normklima gelagert. Nach Entfernen der Trennpapiere wurden einige Prüfkörper (Hanteln mit einer Länge von 75 mm bei einer Steglänge von 30 mm und einer Stegbreite von 4 mm) ausgestanzt und damit die **Zugfestigkeit,** die **Bruchdehnung** und das **E-Modul 5%** (bei 0.5-5% Dehnung) gemäss DIN EN 53504 bei einer Zuggeschwindigkeit von 200 mm/min bestimmt.

Die **Haftung** wurde bestimmt, indem die Zusammensetzung in Form von 5 parallelen Raupen von ca. 10 mm Breite, 5 mm Höhe und 15 mm Länge auf das jeweilige Substrat appliziert wurde. Die Substrate wurden vorgängig abgewischt mit einem Papiertuch getränkt mit einer Mischung aus Isopropanol und Wasser im Gewichtsverhältnis 1:1, und anschliessend mit einem trockenen Papiertuch erneut abgewischt (wipe on, wipe off). Nach einer Aushärtezeit von 7 Tagen im Normklima wurde die Haftung der ausgehärteten Zusammensetzung ein erstes Mal getestet, indem die erste Raupe am schmalen Ende knapp über der Klebefläche eingeschnitten, das eingeschnittene Ende der Raupe mit einer Rundzange festgehalten und versucht wurde, die Raupe vom Substrat wegzuziehen. Dann wurde die Raupe erneut bis auf das Substrat eingeschnitten, wobei der freigeschnittene Teil mit der Rundzange aufgerollt und wiederum versucht wurde, die Raupe vom Substrat wegzuziehen. So wurde die ganze Raupe ziehend vom Substrat weggeschnitten. Anschliessend wurde anhand des Bruchbildes die Haftung wie nachfolgend beschrieben beurteilt. Ein weiteres Mal wurde die Haftung nach einer Aushärtezeit während 14 Tagen im Normklima mit der zweiten Raupe wie beschrieben geprüft. Anschliessend wurde der Prüfkörper während 7 Tagen untergetaucht in deionisiertem Wasser gelagert, dann während 2 Stunden im Normklima aufbewahrt und dann die dritte Raupe wie beschrieben auf Haftung geprüft. Dann wurde der Prüfkörper während 24 Stunden in einem Umluftofen bei 80 °C gelagert, gefolgt von 2 Stunden im Normklima und dann die vierte Raupe wie beschrieben auf Haftung geprüft. Schliesslich wurde der Prüfkörper während 7 Tagen bei 70°C und 100% relativer Feuchtigkeit aufbewahrt, gefolgt von 2 Stunden im Normklima und die fünfte Raupe wie beschrieben auf Haftung geprüft.

Die Haftung wurde geprüft auf Glas und auf verschiedenen Keramiksubstraten mit den folgenden Prüfsubstraten von der Firma Rocholl: Glass Air Side, Glass Tin Side, Keramik JM 1L5350, Keramik JM 1PBL3020, Keramik Ferro 14531 1R7344 und Keramik Ferro 14316 1R7363.

Die Haftung wurde beurteilt anhand dem Flächenanteil, auf welchem nach dem Wegschneiden der Raupe ein kohäsives Bruchbild (CF, cohesive failure) vorhanden war, anhand der folgenden Skala:
"1" steht für 90 bis 100% CF (sehr gute Haftung)
"2" steht für 70 bis 89% CF
"3" steht für 50 bis 69% CF
"4" steht für 25 bis 49% CF
"5" steht für 0 bis 24% CF
Die Resultate sind angegeben in der Reihenfolge der Lagerung 7d RT, 14d RT, 7d H₂O, 1d 80°C und 7d 70°C/100% relative Feuchtigkeit.

Die Resultate sind in Tabelle 1 dargestellt.

Die mit **"(Ref.)"** bezeichneten Zusammensetzungen sind Vergleichsbeispiele.

Aus der Tabelle 1 ist ersichtlich, dass die erfindungsgemässen Zusammensetzungen **Z1** und **Z2** eine gute Lagerstabilität mit einem geringen Anstieg der Auspresskraft nach Lagerung bei 60 °C im verschlossenen Gebinde und sehr gute Haftungseigenschaften auf Glas und verschiedenen Keramiksubstraten zeigten. Die Zusammensetzung **Z3 (Ref.)** mit Diethylmalonat als Stabilisator zeigte zwar auch eine gute Lagerstabilität, hatte aber deutlich schlechtere Haftungseigenschaften, insbesondere auf Keramiksubstraten, insbesondere auf dem Typ JM 1L5350. Die Zusammensetzung **Z4 (Ref.)** ohne Malonat zeigte eine ungenügende Lagerstabilität.

**Tabelle 1: Zusammensetzung und Eigenschaften von Z1 bis Z4.**

| **Zusammensetzung** | **Z1** | **Z2** | **Z3 (Ref.)** | **Z4 (Ref.)** | | |
|---|---|---|---|---|---|---|
| Polymer **P1** | 34.00 | 34.00 | 34.00 | 34.00 | | |
| Polymer **P2** | 6.00 | 6.00 | 6.00 | 6.00 | | |
| Polymer **P3** | 1.00 | 1.00 | 1.00 | 1.00 | | |
| Polymer **P4** | 2.00 | 2.00 | 2.00 | 2.00 | | |
| Epoxysilan | 0.25 | 0.25 | 0.25 | 0.25 | | |
| Dioctyladipat | 10.75 | 9.95 | 11.50 | 11.95 | | |
| Kreide | 25.00 | 25.00 | 25.00 | 25.00 | | |
| Russ | 18.50 | 18.50 | 18.50 | 18.50 | | |
| Malont **M1** | 1.2 | - | - | - | | |
| Malont **M2** | - | 2.0 | - | - | | |
| Diethylmalonat | - | - | 0.45 | - | | |
| Katalysatorlösung¹ | 1.30 | 1.30 | 1.30 | 1.30 | | |

| **Auspresskraft** [N] | | | | | | |
|---|---|---|---|---|---|---|
| | 3d RT | | 1205 | 1248 | 1107 | 1175 |
| | 7d 60°C | | 1506 | 1801 | 1469 | > 3500 |
| | 14d 60°C | | 1577 | 1939 | 1767 | > 3500 |

| **Hautbildungszeit** [min] | | | | | | |
|---|---|---|---|---|---|---|
| | 3d RT | | 18 | 14 | 18 | 16 |
| | 7d 60°C | | 17 | 13 | 17 | n.b.² |
| | 14d 60°C | | 13 | 13 | 18 | n.b.² |
| **Zugfestigkeit** | | [MPa] | 6.8 | 6.2 | 7.1 | 7.8 |
| **Bruchdehnung** | | [%] | 680 | 700 | 650 | 600 |
| **E-Modul 5%** | | [MPa] | 3.8 | 3.2 | 4.0 | 4.3 |

| **Haftung:** | | | | | | |
|---|---|---|---|---|---|---|
| Glass Air Side | | | 1 1 1 1 1 | 1 1 1 1 3 | 1 1 1 1 1 | 1 1 1 1 5 |
| Glass Tin Side | | | 1 1 1 1 1 | 1 1 1 1 1 | 2 1 1 1 1 | 4 1 1 1 1 |
| JM1L5350 | | | 1 1 1 1 1 | 1 1 1 1 1 | 5 5 5 1 5 | n.b.² |
| JM 1PBL3020 | | | 1 1 1 1 1 | 1 1 1 11 | 4 2 1 1 1 | 5 1 1 1 5 |
| Ferro 14531 1R7344 | | | 1 1 1 1 1 | 1 1 1 1 1 | 3 1 2 1 1 | 5 1 1 1 4 |
| Ferro 14316 1R7363 | | | 1 1 1 1 1 | 1 1 1 1 1 | 2 1 1 1 1 | 4 1 1 1 1 |

| | | | | | | |
|---|---|---|---|---|---|---|
| ¹ enthaltend 1 Gew.% DBTDL und 12 Gew.% DMDEE in DOA ² nicht bestimmt | | | | | | |

## Patentansprüche

1. Verwendung von mindestens einem Malonat der Formel (I) als Stabilisator für die Lagerstabilität in Isocyanatgruppen-haltigen Zusammensetzungen, wobei 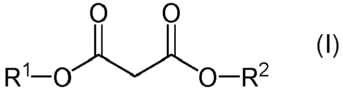
R¹ für einen gegebenenfalls Ethergruppen enthaltenden Kohlenwasserstoffrest mit 5 bis 100 C-Atomen steht, und
R² für R¹ oder R³ steht, wobei R³ für einen gegebenenfalls verzweigten Alkylrest mit 1 bis 4 C-Atomen steht.

2. Verwendung gemäss Anspruch 1, **dadurch gekennzeichnet, dass** R¹ für einen Kohlenwasserstoffrest mit 6 bis 20 C-Atomen, bevorzugt 10 bis 18 C-Atomen, oder für einen Ethergruppen enthaltenden Kohlenwasserstoffrest mit 5 bis 100 C-Atomen, bevorzugt 10 bis 80 C-Atomen, steht.

3. Verwendung gemäss einem der Ansprüche 1 oder 2, **dadurch gekennzeichnet, dass** R¹ ausgewählt ist aus der Liste bestehend aus Decyl, Undecyl, Dodecyl, Tridecyl, Tetradecyl, Pentadecyl, Hexadecyl, Heptadecyl und Octadecyl, wobei diese genannten Alkylgruppen linear oder verzweigt sind, 3,6-Dioxa-1-heptyl, 3,6-Dioxa-1-octyl, 3,6-Dioxa-1-decyl, 3,6-Dioxa-1-dodecyl, 3,6,9-Trioxa-1-tridecyl und weiteren monofunktionellen Polyether-Resten enthaltend Repetiereinheiten ausgewählt aus 1,2-Ethylenoxy, 1,2-Propylenoxy, 1,3-Propylenoxy und 1,4-Butylenoxy,
wobei als monofunktioneller Polyether-Rest der Rest eines Alkanol-gestarteten Poly(oxy-1,2-propylen)monols mit einem mittleren Molekulargewicht Mₙ von 300 bis 2'000 g/mol, bevorzugt 500 bis 1'500 g/mol, insbesondere 500 bis 1'000 g/mol, nach Entfernung der Hydroxylgruppe bevorzugt ist, wobei Alkanol insbesondere für Butanol steht.

4. Verwendung gemäss einem der Ansprüche 1 bis 3, **dadurch gekennzeichnet, dass** der Stabilisator ein Gemisch von Malonaten der Formel (I) umfasst, bei welchem ein Teil der Reste R² für R¹ steht und ein Teil der Reste R² für R³ steht.

5. Verwendung gemäss einem der Ansprüche 1 bis 4, **dadurch gekennzeichnet, dass** die Isocyanatgruppen-haltige Zusammensetzung bezogen auf 100 Gewichtsteile der Isocyanatgruppen-haltigen Zusammensetzung 0.3 bis 15 meq, bevorzugt 0.5 bis 8 meq, insbesondere 1 bis 5 meq, Malonatgruppen aus Malonaten der Formel (I) enthält.

6. Verwendung gemäss einem der Ansprüche 1 bis 5, **dadurch gekennzeichnet, dass** das Malonat der Formel (I) ein Reaktionsprodukt aus der Umesterung von mindestens einem Malonat der Formel (II) mit mindestens einem Monoalkohol der Formel (III) unter Entfernung von Alkohol der Formel R³-OH umfasst, 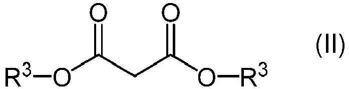 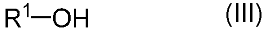 wobei die Umesterung bevorzugt in einem molaren Verhältnis Monoalkohol der Formel (III) zu Malonat der Formel (II) im Bereich von 1 bis 2, bevorzugt 1.2 bis 2.0, mehr bevorzugt 1.5 bis 1.9, insbesondere 1.7 bis 1.9, erfolgte.

7. Härtbare Zusammensetzung erhalten aus der Verwendung gemäss einem der Ansprüche 1 bis 6, enthaltend mindestens ein Isocyanatgruppen-haltiges Polymer und mindestens ein Malonat der Formel (I).

8. Zusammensetzung gemäss Anspruch 7, **dadurch gekennzeichnet, dass** das Isocyanatgruppen-haltige Polymer bezogen auf das gesamte Polymer einen NCO-Gehalt von 0.5 bis 8 Gewichts-%, bevorzugt 0.75 bis 5 Gewichts-%, insbesondere 1 bis 3 Gewichts-%, hat.

9. Zusammensetzung gemäss einem der Ansprüche 7 oder 8, **dadurch gekennzeichnet, dass** die Isocyanatgruppen des Isocyanatgruppen-haltigen Polymers abgeleitet sind von mindestens einem monomeren Diisocyanat ausgewählt aus der Liste bestehend aus 4,4'-Diphenylmethandiisocyanat, 2,4'-Diphenylmethandiisocyanat, 2,4-Toluendiisocyanat, 2,6-Toluendiisocyanat, 1,6-Hexandiisocyanat, Isophorondiisocyanat, 4,4'-Diisocyanatodicyclohexylmethan und 1-Methyl-2,4(6)-diisocyanatocyclohexan.

10. Zusammensetzung gemäss einem der Ansprüche 7 bis 9, **dadurch gekennzeichnet, dass** die Zusammensetzung mindestens einen weiteren Bestandteil ausgewählt aus Füllstoffen, Weichmachern, Katalysatoren und Haftvermittlern enthält.

11. Zusammensetzung gemäss einem der Ansprüche 7 bis 10, **dadurch gekennzeichnet, dass** die härtbare Zusammensetzung einkomponentig ist.

12. Ausgehärtete Zusammensetzung erhalten aus der Zusammensetzung gemäss einem der Ansprüche 7 bis 11 nach dem Kontakt mit Feuchtigkeit.

13. Ausgehärtete Zusammensetzung gemäss Anspruch 12, **dadurch gekennzeichnet, dass** die ausgehärtete Zusammensetzung elastisch ist und insbesondere eine Zugfestigkeit von mindestens 2 MPa, bevorzugt mindestens 3 MPa, und eine Bruchdehnung von mindestens 150 %, bevorzugt mindestens 300 %, aufweist, bestimmt gemäss DIN EN 53504 bei einer Zuggeschwindigkeit von 200 mm/min an hantelförmigen Prüfkörpern mit Länge 75 mm, Steglänge 30 mm, Stegbreite 4 mm und Dicke 2 mm.

14. Verfahren zum Verkleben oder Abdichten, umfassend die Schritte
(i) Applizieren der Zusammensetzung gemäss einem der Ansprüche 7 bis 11
- auf ein erstes Substrat und Kontaktieren der Zusammensetzung mit einem zweiten Substrat innerhalb der Offenzeit der Zusammensetzung, oder
- auf ein erstes und auf ein zweites Substrat und Fügen der beiden Substrate innerhalb der Offenzeit der Zusammensetzung, oder
- zwischen zwei Substrate,
(ii) Aushärten der Zusammensetzung durch Kontakt mit Feuchtigkeit.

15. Verklebter oder abgedichteter Artikel erhalten aus dem Verfahren gemäss Anspruch 14.
